# EUROPÄISCHE PATENTSCHRIFT

(11) **EP 1 249 375 B1**
(45) Veröffentlichungstag und Bekanntmachung des Hinweises auf die Patenterteilung: **20.04.2005**
(21) Anmeldenummer: 02006736.9
(22) Anmeldetag: 23.03.2002
(51) Int. Cl.: B60R 25/02

(54) **Vorrichtung zur Verriegelung einer Lenksäule in einem Fahrzeug**
Locking device for a vehicle steering column
Dispositif de verrouillage pour la colonne de direction d'un véhicule

(30) Priorität: 14.04.2001 DE 10118545
(43) Veröffentlichungstag der Anmeldung: 16.10.2002
(73) Patentinhaber: Huf Hülsbeck & Fürst GmbH & Co. KG, 42551 Velbert (DE)
(72) Erfinder: Wittwer, Reinhard, 42579 Heiligenhaus (DE)
(74) Vertreter: Mentzel, Norbert, Dipl.-Phys.

(56) Entgegenhaltungen:
- DE-A- 4 446 613
- DE-C- 10 030 688
- DE-C- 19 719 343

## Beschreibung

Die Erfindung richtet sich auf eine Vorrichtung der im Oberbegriff des Anspruches 1 angegebenen Art. Als Verriegelungselement verwendet man einen Zahn, der von einem Schlitten getragen wird und federbelastet ist. Der mit dem Zahn versehene Schlitten wird von einem Exzenter quer zur Lenksäulen-Achse bewegt und gelangt dabei in zwei gegensätzliche Lagen bezüglich einer mit der Lenksäule drehfesten Gegenzahnung. In der einen Lage fährt der Zahn in den Zahnzwischenraum der an der Lenksäule befindlichen Gegenzahnung ein, was den Verriegelungsfall kennzeichnet. Dann befindet sich der Schlitten in seiner Sicherungslage. Die Entsicherungslage des Schlittens liegt vor, wenn der am Schlitten befindliche Zahn die Gegenzahnung an der Lenksäule frei gibt.

Bei der bekannten gattungsbildenden Vorrichtung dieser Art (DE 198 09 295 C 1 bzw. DE 197 19 343 C1) ist der Zahn am vorderen Ende des Schlittens schwenkbar gelagert. Die Schwenklagerachse verläuft parallel zur Lenksäulenachse. Eine Zentrierfeder zwischen dem Zahn und dem Schlitten sorgt für eine parallel zur Schlittenführung verlaufende Ausgangsposition des Zahns. Aus dieser Ausgangsposition kann der Zahn bei Umsteuerung des Schlittens in die Sicherungslage in eine schräge Neigungsposition gelangen, wenn er nicht mit einer Zahnlücke der an der Lenksäule sitzenden Gegenzahnung ausgerichtet ist. Die schräge Neigungsposition des Zahns ist für die Verriegelung der Lenksäule ungünstig. Eine solche Neigungslage des Zahns ergibt sich nur dann, wenn bei der Schlitten-Bewegung die Zahnspitze eine Zahnflanke der Gegenzahnung trifft. Probleme ergeben sich, wenn ein Spitzenaufsatz stattfindet, wenn also die Zahnspitze am Schlitten auf die Gegenzahnspitze an der Lenksäule trifft, dann kann der federbelastete Schlitten nicht in die Sicherungslage gelangen; die Lenksäule ist dann nicht verriegelt. Dieser kritische Fall kann auch dann auftreten, wenn sowohl der Zahn als auch die Gegenzahnung zugespitzt sind, zumal Zahnspitzen im Laufe des Gebrauchs verschleißen und damit stumpf werden können.

Um solche Fehlsteuerungen wenigstens anzeigemäßig erkennen zu können, war man bei der bekannten Vorrichtung (DE 198 09 295 C1) auf Sensoren angewiesen, welche die ordnungsgemäße Sicherungslage des Schlittens detektieren konnten. Mit dieser Überwachung ließ sich zwar die Gefahr der Fehlsteuerung erkennen, aber die Fehlsteuerung weder vermeiden noch beseitigen. Außerdem ist eine solche Sensorüberwachung aufwendig und ihrerseits störanfällig.

Bei einer Vorrichtung anderer Art (DE 199 29 435 A1), bei welcher die Lenksäule nur eine Sperröffnung für einen als Verriegelungselement fungierenden Bolzen besitzt, ist es bekannt den Bolzen in einem Hubglied federbelastet aufzunehmen. Das Hubglied steht unter einer im Ausfahrsinne auf ihn wirkenden Rückstellfeder und wird durch einen Endanschlag in seiner Ausfahrlage gehalten. Das Hubglied wird von einem Hubrad ringartig umschlossen. Das Hubrad wird von einem Motor gedreht und besitzt eine Steuerkurve, die bei der Drehung des Hubrads über abragende Führungsarme das Hubglied gegen die Rückstellfeder einfährt. Wenn der federbelastete Sperrbolzen in der Sicherungslage seines Hubglieds die Sperröffnung in der Lenksäule nicht trifft, dann ist die Lenksäule zunächst nicht verriegelt.

Bei einer weiteren Vorrichtung ähnlicher Art (DE 44 46 613 A1) wird die Längsbewegung des Hubglieds statt mittels eines Hubrads durch einen Bowdenzug gesteuert, welcher an einem Rotor eines Zündschlosses angreift. Der letztgenannte Nachteil tritt auch hier auf.

Ein ähnlicher Nachteil ergibt sich auch bei einer anderen bekannten Vorrichtung (DE 100 30 688 C1), wo die Lenksäule drehfest mit einer Sperrhülse versehen ist, welche mehrere, voneinander beabstandete Sperröffnungen aufweist. Zwischen den Sperröffnungen befinden sich Segmente mit zylindrischer Umfangsfläche, an welcher sich der federbelastete Sperrbolzen in der Entsicherungslage des zugehörigen Endglieds dann abstützt, wenn das federbelastete Bolzenende die Sperröffnung nicht trifft. Eine Verriegelungswirkung der Lenksäule liegt dann nicht vor.

Schließlich ist eine Vorrichtung bekannt (EP 0 957 015 A2), bei welcher ein durch einen Schlüssel betätigbarer Schließzylinder über eine Hebelübersetzung auf ein längsbewegliches, im Ausschubsinne federbelastetes Verriegelungselement wirkt, das mit einer Sperröffnung in der Lenksäule in Eingriff kommen soll. Ein Schlitten oder ein Exzenter zur Aufnahme und zur Steuerung des Verriegelungselements sind hier nicht vorgesehen.

Ausgehend von einer Vorrichtung der im Oberbegriff des Anspruches 1 angegebenen Art liegt der Erfindung die Aufgabe zugrunde, die eingangs genannten Fehlsteuerungen zu vermeiden. Dies wird durch die im Anspruch 1 angeführten Maßnahmen erreicht, denen folgende besondere Bedeutung zukommt.

Bei der Erfindung ist der Zahn Bestandteil eines Schiebers, der relativ zum Schlitten zwischen einem inneren und äußeren Endanschlag längsbeweglich ist. Die Schlittenbewegung bei der Umsteuerung zwischen der Sicherungs- und Entsicherungslage wirkt sich daher bei der Erfindung auf den Zahn nur mittelbar aus, nämlich über den Schieber. Zwischen seinen beiden Endanschlägen im Schlitten ist der Schieber, wie vorausgehend genannten Stand der Technik an sich bekannt, durch die Federbelastung im Ausfahrsinne federbelastet und wird in der Entsicherungslage vom äußeren Endanschlag gehalten. Wenn man dieses bekannte Bauprinzip bei einer Vorrichtung der im Oberbegriff genannten Art anwendet, so trifft zwar die am Schieber befindliche Zahnspitze in manchen Fällen auf die Gegenzahnspitze der an der Lenksäule befindlichen Gegenzahnung, doch kann der Schlitten zunächst ohne Mitnahme des Schiebers in seine volle Sicherungslage überführt werden. Der Schieber fährt in diesem Fall, wie an sich bekannt, gegen seine Federbelastung in den Schlitten ein. Bei der Erfindung kommt aber noch hinzu, dass in diesem Fall mit Sicherheit auch noch eine Verriegelung des Zahns in den Zwischenräumen der Gegenzahnung erfolgt.

Ursache dafür ist der Neigungsverlauf der Schieber-Längsbewegung bezüglich der Richtung der Schlittenbewegung. Wenn nämlich in dem geschilderten Problemfall bei der Umsteuerung des Schlittens aus der Entsicherungslage die Zahnspitze zunächst eine Gegenzahnspitze der Lenksäule kontaktiert, so ändert sich dies wegen der Neigungsposition des Schiebers im weiteren Verlauf der Schlittenbewegung. Die Zahnspitze fährt infolge der Neigung mit Sicherheit auf die Flanke der Gegenzahnung, wo auf Grund der Schieber-Federbelastung der Zahn abgleiten und im Eingriffssinne in den Zahnzwischenraum einfahren kann. In der Sicherungslage des Schlittens gelangt der Zahn immer, also auch in dem vorgenannten Problemfall, in seine Verriegelungsposition bezüglich der Lenksäule.

Wie es Anspruch 2 vorschlägt, ist mittels des Exzenters eine Zwangssteuerung des Schlittens zwischen seinen beiden Lagen möglich. Der Schlitten wird nicht nur in seiner Entsicherungslage, sondern auch in seiner Sicherungslage vom Exzenter formschlüssig gehalten. Der Sicherungslage ist der Schieber gegen seine Federbelastung in Richtung seines inneren Endanschlags im Schlitten soweit zurückgeschoben, dass Manipulationen am Schlitten durch Unbefugte erfolglos sind; der Zahn bleibt in vollem Eingriff mit einem Zahnzwischenraum der längssäulenseitigen Gegenzahnung. Die Verriegelung der Lenksäule ist garantiert. Im Idealfall liegt in der Sicherungslage des Schlittens nicht nur eine formschlüssige Abstützung des Exzenters am Schlitten, sondern auch des Schiebers an seinem inneren Endanschlag im Schlitten vor.

Weiter Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt. Es zeigen:
- Fig. 1+2: einen achsparallelen bzw. radialen Schnitt zur Lenksäule, durch die erfindungsgemäße Vorrichtung längs der versprungenen Schnittlinien I - I von Fig. 2 bzw. II - II von Fig. 1, wenn eine Sicherungslage vorliegt, wobei der Schieber bereichsweise in Fig. 2 ausgebrochen ist,
- Fig. 3: einen Querschnitt durch die erfindungsgemäße Vorrichtung längs der versprungenen Schittlinie III - III von Fig. 2,
- Fig. 4,: in einem der Fig. 2 entsprechenden Radialschnitt, ein Teilstück der erfindungsgemäßen Vorrichtung, wenn eine Entsicherungslage vorliegt,
- Fig. 5,: in einer der Fig. 4 entsprechenden Darstellung, eine Zwischenposition der erfindungsgemäßen Vorrichtung bei einer Umsteuerung aus einer Entsicherungslage in eine künftige Sicherungslage , und zwar in jenem Problemfall, wo Zahnspitzen am Verriegelungselement der Vorrichtung mit Gegenzahnspitzen an der Lenksäule zusammentreffen,
- Fig. 6,: in Vergrößerung gegenüber Fig. 5, die bei diesem Problemfall im Zuge der weiteren Umsteuerung der Vorrichtung sich ergebende nächste Bewegungsphase,
- Fig. 7: die beim Problemfall von Fig. 5 und 6 sich ergebende End-Stellung der Vorrichtung, wenn die der Fig. 2 entsprechenden Sicherungslage vorliegt, wobei die Schnittführung für Fg. 7 in einer gegenüber der Schnittlinie II - II von Fig. 1 höheren Ebene erfolgt,
- Fig. 8: einen Grenzfall bei der Umsteuerung der Vorrichtung zwischen der Sicherungslage von Fig. 2 in die Entsicherungslage von Fig. 4,
- Fig. 9: die sich im Anschluss an Fig. 8 ergebende Bewegungs-Phase bei der Umsteuerungsbewegung der Vorrichtung,
- Fig. 10: den in Fig. 8 bereits gezeigten Grenzfall, wenn eine gegenüber Fig. 1 bis 9 abgewandelte zweite Ausführungsform der erfindungsgemäßen Vorrichtung vorliegt,
- Fig. 11: in einer der Fig. 2 entsprechenden Darstellung und in Vergrößerung, ein Bruchstück einer dritten Alternative der erfindungsgemäßen Vorrichtung,
- Fig. 12: einen Längsschnitt durch die in Fig. 11 gezeigte Alternative bei einer Schnittführung längs versprungenen Schnittlinie XII - XII von Fig. 11 und
- Fig. 13: in einer der Fig. 2 entsprechenden Darstellung, ein Bruchstück einer vierten Ausführungsform der erfindungsgemäßen Vorrichtung in der Sicherungslage.

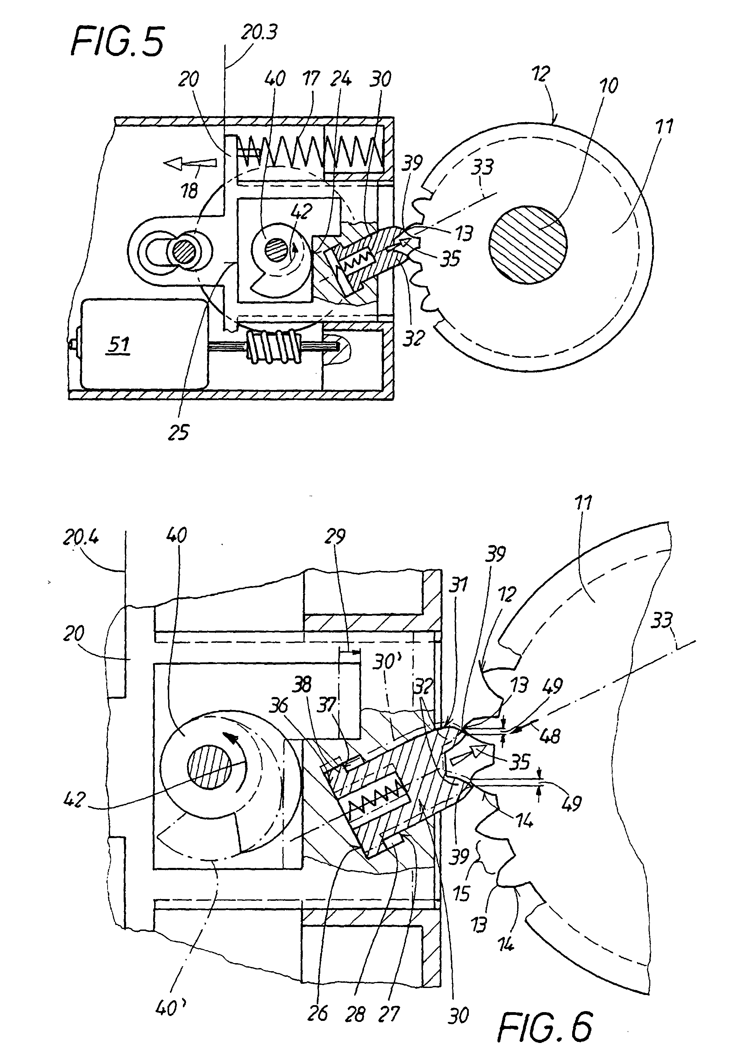

Die erfindungsgemäße Vorrichtung dient dazu, eine Lenksäule 10 fallweise zu verriegeln. Dazu ist die Lenksäule 10 mit einem drehfesten Zahnrad 11 verbunden, das mit einer ein bestimmtes Profil aufweisenden Gegenzahnung 12 versehen ist. Das Zahnprofil umfasst nämlich zugespitzte Zähne, die, wie aus der Vergrößerung von Fig. 6 zu erkennen ist, Gegenzahnspitzen 13 mit beidseitig geneigten Zahnflanken 14 besitzen. Zwischen den Zähnen liegen Zahnzwischenräume 15, die mit einem hier zwei Zähne 32 aufweisenden Zahnsegment 31 zusammenwirken.

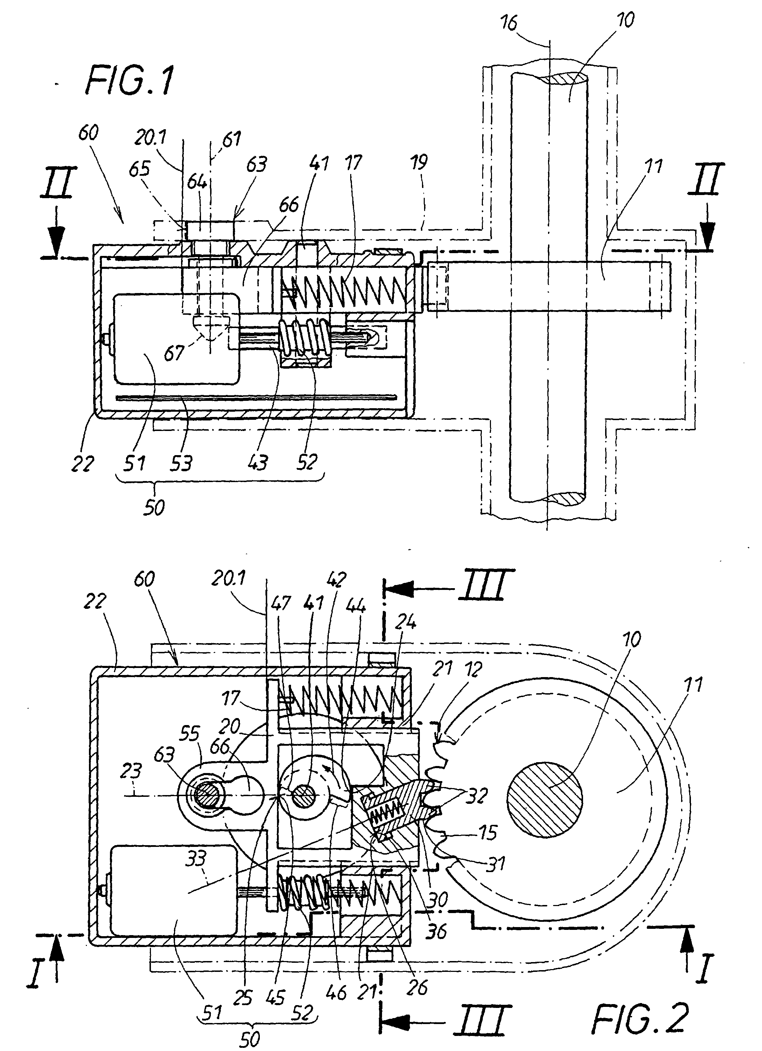

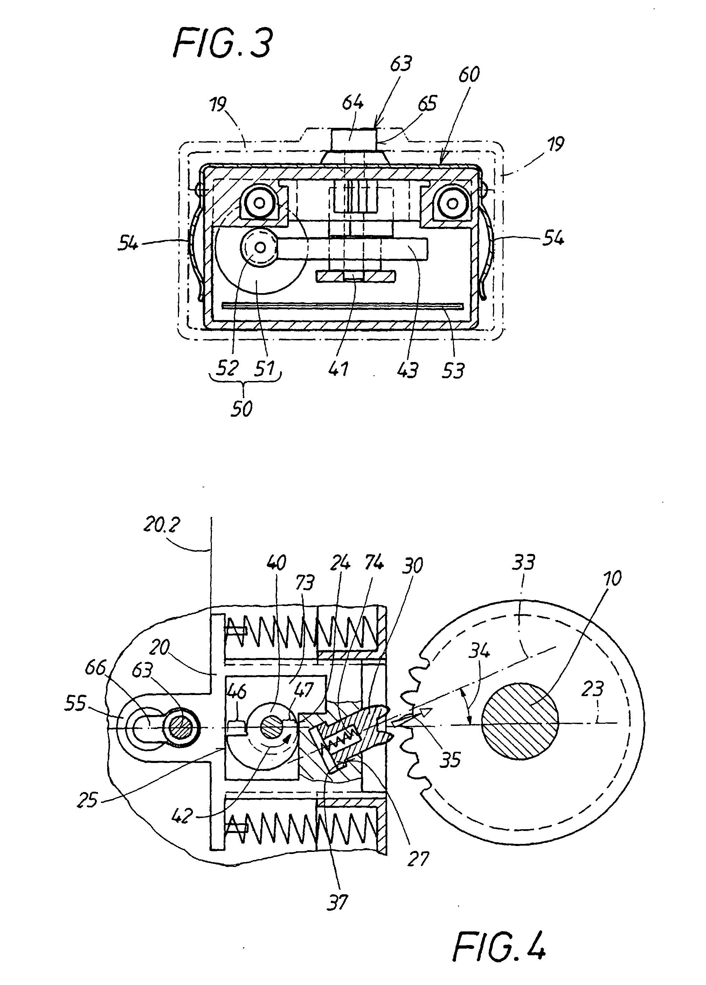

Dieses Zahnsegment 31 sitzt am Vorderende eines Schiebers 30 in einem Schlitten 20. Der Schieber 30 ist im Sinne der strichpunktiert eingezeichneten Längsbewegungslinie 33 geneigt zur Schlittenführung 21 verschieblich. Die Schlittenführung 21 ist einem Gehäuse 22 integriert, wo die Linie 23 der Schlittenbewegung ebenfalls strichpunktiert angedeutet ist. Wie Fig. 4 verdeutlicht, schließen die beiden Bewegungslinien 23, 33 einen Neigungswinkel 34 zwischen sich ein. Die Schlittenbewegung 23 verläuft quer zur aus Fig. 1 ersichtlichen Lenksäulenachse 16 und im Normalfall, gemäß Fig. 2 bis Fig. 4, schneidet die Schlittenbewegungslinie 23 die Längssäulenachse 16.

In Fig. 1 bis 3 liegt der "Verriegelungsfall" vor, wo die Doppelzähne 32 vom Zahnsegment 31 in die damit ausgerichteten Zahnzwischenräume 15 der Gegenzahnung 12 eingreifen. Die beiden Zähne 32 liegen beidseits symmetrisch zur Schlittenbewegungslinie 23, sind also gegenüber der Schieber-Längsbewegung 33 abgewinkelt. Im Verriegelungsfall befindet sich der Schlitten 20 in der durch Hilfslinie 20.1 und in Fig. 1 veranschaulichten Sicherungslage. Diese Sicherungslage 20.1 ist durch eine bestimmte Drehstellung eines Exzenters 40 bestimmt, der über eine Welle 41 im Gehäuse 22 im Sinne des Pfeils 42 drehbar ist. Der Exzenter 40 besitzt zwei einander diametral gegenüberliegende Umfangsbereiche 44, 45, denen zwei gegeneinanderweisende Steuerstellen 24, 25 am Schlitten 20 zugeordnet sind. Wie aus Fig. 2 ersichtlich, wird der Schlitten 20 in der Sicherungslage 20.1 im Wesentlichen formschlüssig an der vorderen Steuerstelle 24 in seinem Umfangsbereich 44 gehalten, wo sich in dieser Lage gerade das radiale Maximum 46 des Exzenters 40 befindet. In dieser Drehlage des Exzenters 40 sind also Manipulationen am Schlitten 20 in Richtung seiner noch näher zu beschreibenden Entsicherungslage 20.2 von Fig. 4 nicht möglich. Im gegenüberliegenden hinteren Umfangsbereich 45 kann es dabei im Wesentlichen auch zu einer formschlüssigen Berührung mit der hinteren Steuerstelle 25 vom Schlitten 20 kommen. In diesem hinteren Umfangsbereich befindet sich in dieser Drehstellung das Radialminimum 47 des Exzenters 40.

In der Sicherungslage 20.1 von Fig.1 bis 3 sind auch Manipulationen am Schieber 30 ausgeschlossen. Der Schieber 30 besitzt, wie aus der Vergrößerung in Fig. 6 hervorgeht, einen verbreiterten Kopf 38, der in einer definiert dimensionierten Aussparung 28 im Schieber 30 längsverschieblich aufgenommen ist. Die Aussparung 28 bestimmt einen inneren und einen äußeren Endanschlag 26, 27, die mit ihren zugeordneten inneren und äußeren Schultern 36, 37 vom Schieberkopf 38 zusammenwirken. In der Sicherungslage 20.1 von Fig. 2 ist die innere Schulter 36 vom Schieber 30 so nahe am inneren Endanschlag 26, dass ein Aushub der Zähne 32 aus den Zahnzwischenräumen 15 der Gegenzahnung 12 unmöglich ist. Im Idealfall liegt hier eine Berührung der Schulter 36 am Endanschlag 26 vor.

Die Drehbewegung 42 des Exzenters 40 erfolgt über einen Antrieb 50, der ebenfalls im Inneren des Gehäuses 22 angeordnet ist und aus einem Elektromotor 51, einer Schnecke 52 und einem drehfest auf der Exzenterwelle 41 sitzenden Schneckenrad 43 besteht. Die Drehung 42 des Exzenters 40 wird durch nicht näher gezeigte Zugangsberechtigungsmittel ausgelöst, die mit einer elektronischen Steuerung zusammenwirken. Als Zugangsberechtigungsmittel ist z.B. ein Schließzylinder mit einem mechanischen Schlüssel oder ein Rotor mit einem elektronischen Schlüssel verwendbar. Alternativ könnte man bei einem sogenannten "Keyless-go" eine Berechtigungskarte einen Karten-Leser und einen Betätiger verwenden. In all diesen Fällen wird die elektrische Steuerung von den Zugangsberechtigungsmitteln wirksam gesetzt. Der Motor 51 dreht den Exzenter 40, bis der aus Fig. 4 ersichtliche "Freigabefall" vorliegt, wo die Lenksäule 10 frei beweglich ist. Nach dieser Entriegelung der Lenksäule 10 stoppt der Motor 51 zunächst die Drehung 42 des Exzenters 40 solange, bis die Zugangsberechtigungsmittel wieder betätigt werden. Es liegt dann die bereits erwähnte Entsicherungslage 20.2 von Fig. 4 vor. Elektrische Bauteile für diese Steuerung können auf einer Leiterplatte 53 sitzen, die, gemäß Fig. 1, ebenfalls im Inneren des Gehäuses 22 positioniert sein kann.

In der Entsicherungslage 20.2 von Fig. 4 nimmt der Exzenter 40 eine zur vorbeschriebenen Sicherungslage 20.1 von Fig. 2 entgegengerichtete Drehlage ein. Das Radialmaximum 46 wirkt jetzt mit der hinteren Steuerstelle 25 des Schlittens 20 zusammen, während das Radialminimum 47 sich jetzt an der vorderen Steuerstelle 24 befindet. Auch in diesem Fall liegt eine formschlüssige Lage des Schlittens 20 am Exzenter 40 vor.

Bei der Umsteuerung des Schlitten 20 kommt der Schieber 30 selbsttätig in seine andere Endlage. Dafür sorgt eine zwischen dem Schieber 30 und dem Schlitten 20 vorgesehene Federbelastung 74, die eine im Ausfahrsinne wirksame Federkraft 35 auf den Schieber 30 ausübt. Der Ausschubweg des Schiebers 30 ist in der Entsicherungslage 20.2 durch Anlage der äußeren Schieberschulter 37 am äußeren Endanschlag 27 des Schlittens 20 definiert.

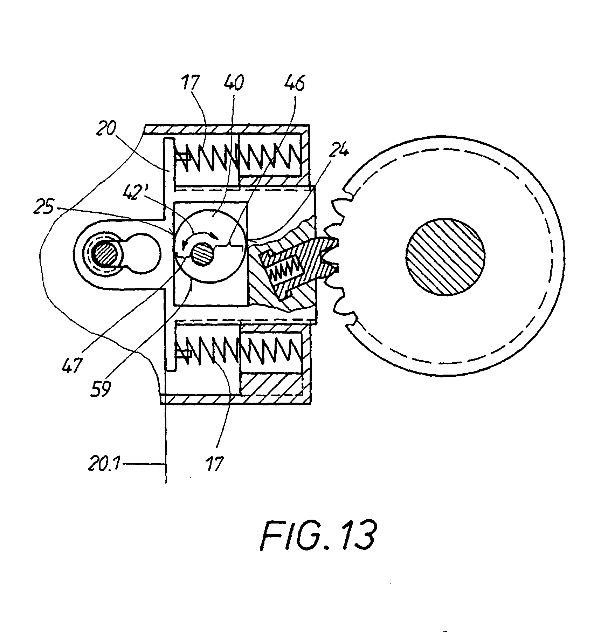

Die Fig. 5 zeigt einen Problemfall, der von der erfindungsgemäßen Vorrichtung selbsttätig gelöst wird und sich manchmal ergibt, wenn, ausgehend von der Entsicherungslage 20.2 von Fig. 4, der Schlitten wieder in die Sicherungslage 20.1 zurückbewegt wird. Die Fig. 5 zeigt die bei diesem Problemfall sich ergebende Anfangs-Phase. Die Umsteuerung zwischen den beiden Lagen 20.2 und 20.1 erfolgt, weil die schon genannten Zugangsberechtigungsmittel unwirksam gesetzt werden; es wird z.B. der mechanische Schlüssel aus seinem in eine Nullstellung zurückgedrehten Schließzylinder herausgezogen. Der Motor 51 dreht dann den Exzenter 40 im Sinne des Pfeils 42 und der Schlitten 20 kommt in eine erste, in Fig. 5 mit der Hilfslinie 20.3 gekennzeichnete Zwischenposition. In dieser Zwischenposition 20.3 stützt sich der Exzenter 40 bei diesem Ausführungsbeispiel - im Gegensatz zum vierten Ausführungsbeispiel von Fig. 13 - nur an der vorderen Steuerstelle 24 des Schlittens ab, während die hintere Steuerstelle 25 zunächst freigegeben ist. Zuständig für die Anlage bei 24 sind am Schlitten 20 angreifende Druckfedern 17, die eine aus Fig. 5 erkennbare Rückstellkraft 18 auf den Schlitten 20 ausüben, die bestrebt ist, den Schlitten 20 wieder in seine Entsicherungslage 20.2 von Fig. 4 rückzubewegen. Der Problemfall von Fig. 5 ergibt sich, weil trotz der Zuspitzung der Zähne 32 und der Zahnprofile der Gegenzahnung 12 die schieberseitigen Zahnspitzen 39 die vorerwähnten Gegenzahnspitzen 13 der Gegenzahnung 12 gerade kontaktieren. Normalerweise müsste man bei einem solchen Problemfall mit Betriebsstörungen rechnen, was aber die Erfindung in eleganter Weise aus folgendem Grund vermeidet.

Trotz der wechselseitigen Spitzenberührung 13, 39 in Fig. 5 ist zunächst eine Weiterdrehung 42 des Exzenters 40 ohne Beschädigung der Bauteile möglich. Der Schieber 30 lässt sich nämlich gegen seine Federkraft 35 in seinem Längsbewegungspfad 33 verschieben. Es kommt zu einer zweiten, aus Fig. 6 ersichtlichen Zwischenposition 20.4 des Schlittens 20. Die vorausgehende Drehstellung 40' des Exzenters von Fig. 5 ist in Fig. 6 strichpunktiert veranschaulicht. Der Schieber 30 hat sich in Fig. 6 auf seinem Längsbewegungspfad mit seinem Schieberkopf 38 bis zum inneren Endanschlag 26 zurückbewegt, und zwar um die in Fig. 6 mit 48 gekennzeichnete Strecke. In Fig. 6 ist die vorausgehende Ausschublage 30' des Schiebers von Fig. 5 strichpunktiert eingezeichnet. Weil aber der Bewegungsweg 33 des Schiebers 33 geneigt zu der um die Strecke 29 verschobenen Schlittenbewegung erfolgt, haben die Schieber-Zahnspitzen 39 ihre Abstützung an den Gegenzahnspitzen 13 verlassen; sie haben sich um die mit 49 in Fig. 6 veranschaulichte Versatzstrecke 49 quer bewegt. Sie befinden sich jetzt in Kontakt mit den an die Gegenzahnspitzen 13 sich anschließenden Zahnflanken 14, an denen sie jetzt bei der Weiterdrehung 42 des Exzenters 40 entlang gleiten können.

Die um die Strecke 49 versetzten Schieber-Zahnspitzen 39 erzeugen beim Entlanggleiten an den Zahnflanken 14 eine Kraftkomponente, die ein kleines Drehmonent auf die Gegenzahnung 12 ausüben kann, um die Lenksäule 10 etwas zu verdrehen. Eine solche kleine Verdrehung reicht aus, damit der Schieber 30 bei Weiterdrehung 42 des Exzenters 40 aufgrund des Exzenterprofils und gegebenenfalls aufgrund seiner Federkraft 35 ausfahren kann. In der Sicherungslage 20.1 liegt schließlich auch in diesem Problemfall der volle Eingriff zwischen dem Zahnsegment 31 und der Gegenzahnung 12 gemäß Fig. 2 vor. In einem Extremfall könnten die Räder des Fahrzeugs die vorgenannte Selbstjustierung der Lenksäule 10 ausschließen, aber selbst in diesem Extremfall löst die Erfindung das Problem auf folgende besondere Weise.

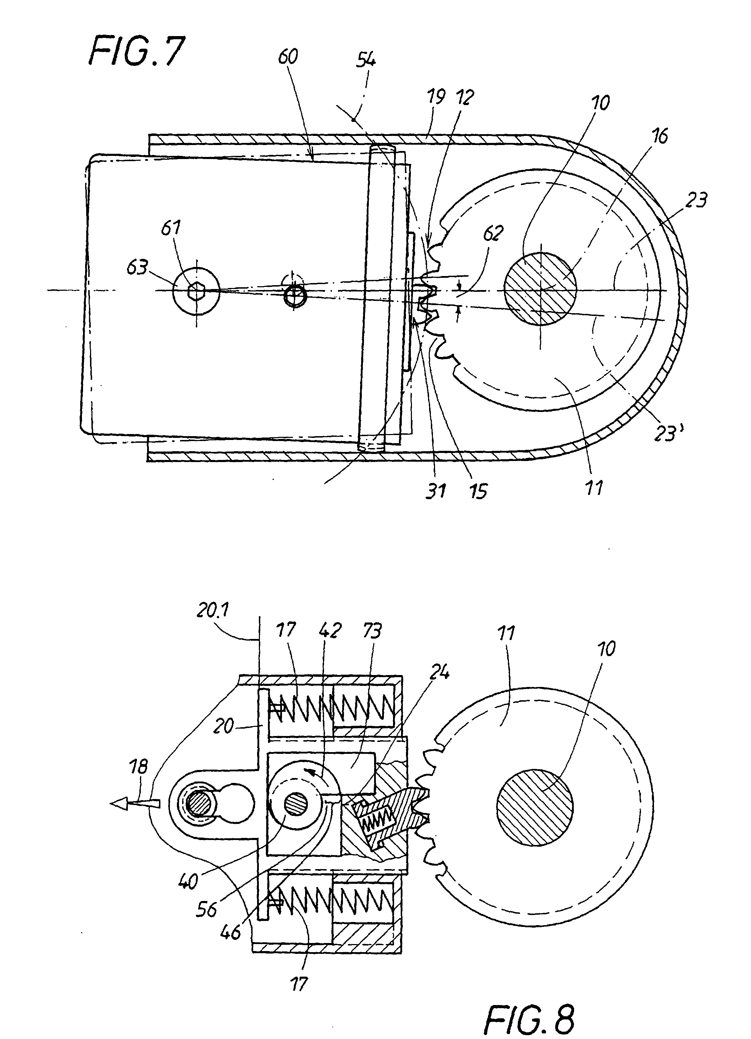

Wie aus den Fig. 1 bis 3 hervorgeht, liegt bei der Erfindung im Inneren des Gehäuses 22 eine Baueinheit 60 vor. Zu dieser Baueinheit 60 gehören der erwähnte Antrieb 50, bestehend aus Elektromotor 51 und Schnecke 52, ferner die Welle 21 mit dem Exzenter 40 und dem Schneckenrad 43 und schließlich der Schlitten 20 mit dem darin aufgenommen Schieber 30 und den auf ihn wirkenden Druckfedern 17. Diese Baueinheit 60 ist über ein Lager 61 an einem strichpunktierten in Fig. 1 und Fig. 2 angedeuteten Träger 19 schwenkbar gelagert. Der Träger 19 besteht hier aus einer Verkleidung, die auch die Lenksäule 10 und ihr Zahnrad 11 umschliesst. Durch das Schwenklager 61 ist eine in Fig. 7 durch die Strecke 62 verdeutlichte Schwenkbewegung der dort in ihren Umrissen gezeigten Baueinheit 60 möglich. Das Schwenklager 61 befindet sich, wie Fig. 7 zeigt, in dem Endbereich der Baueinheit 60, der vom Zahnsegment 31 abgekehrt ist.

Diese Schwenkbewegung 62 erlaubt es der Baueinheit 60 die Schlittenbewegung 23, wie Fig. 7 zeigt, von ihrer ursprünglichen die Lenksäulen-Achse 16 schneidenden symmetrischen Ausgangsstellung 23 in die entsprechend unsymmetrische Schwenkstellung 23' zu überführen. Wie aus Fig. 3 hervorgeht, können Zentrierfedern 75 zwischen der Baueinheit 60 und dem Träger 19 dazu dienen, die die Baueinheit 60 in ihre symmetrische Ausgangsstellung 23 von Fig. 2 zurückzustellen. Mit dieser Schwenkbewegung 62 von Fig. 7 kann das Zahnsegment 31 auch dann problemlos in die Zahnzwischenräume 15 der Gegenzahnung 12 einfahren, wenn die Lenksäule 10 unverdrehbar blockiert sein sollte. Durch die Schwenkbewegung 60 der Baueinheit wird bei der Erfindung dafür gesorgt, dass das Zahnsegment 31 sich gegenüber der starren Gegenzahnung 12 im Sinne eines vollen Zahneingriffs verstellt. Die vorerwähnte Neigung der Zahnflanken 14 erzeugt ein auf die Baueinheit 60 wirkendes Drehmoment im Schwenkbewegungssinne 62.

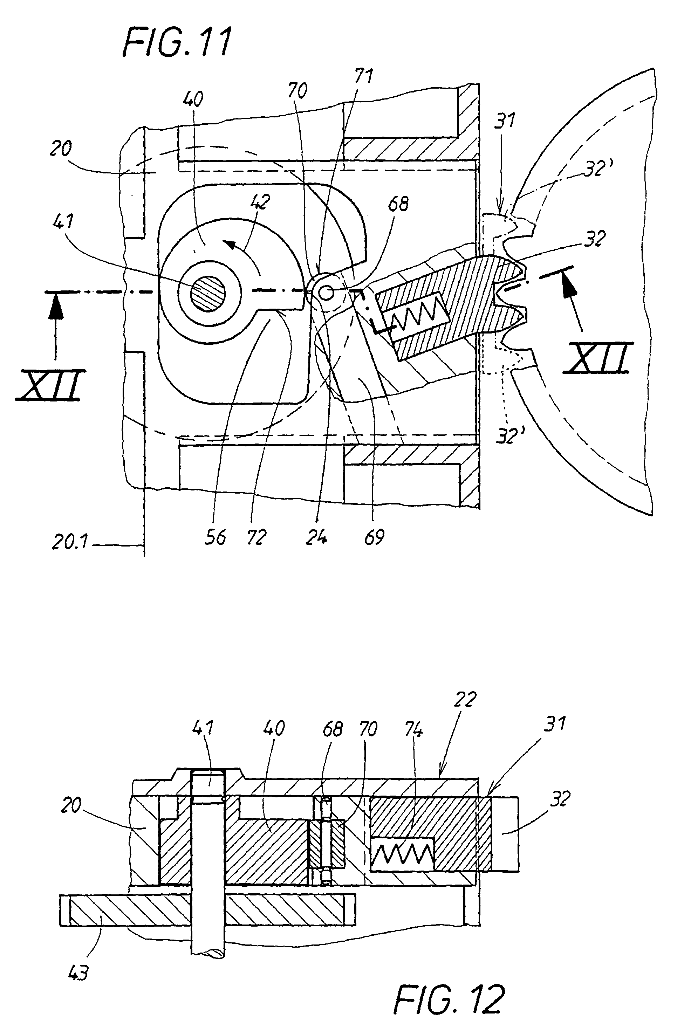

Wie bereits erwähnt, sind bei der Erfindung nicht nur ein einzelner Zahn 32, sondern mindestens zwei oder mehr Zähne 32' möglich, die sperrwirksam in die Gegenzahnung 32 einfahren. Das ist in Fig. 11 durch gepunktete weitere Zähne 32' veranschaulicht. Ein solches Zahnsegment 31 positioniert seine Doppelzähne 32 oder mehrfachen Zähne 32' auf einem in Fig. 7 strichpunktiert hervorgehobenen Teilkreis 54, dessen Mittelpunkt annähernd im Schwenklager 61 liegen sollte. Durch die mehrfach vorgesehenen Zähne 32, 32' ist eine besonders zuverlässige Verriegelung der Lenksäule 10 in der Sicherungslage 20.1 möglich.

Im vorliegenden Fall wird das Schwenklager 61 von einem Lagerbolzen 63 gebildet, der zugleich das Befestigungsmittel für die Baueinheit 60 am Träger 19 ist. Der Bolzen 63 ragt mit seinem oberen Bolzenende 64 aus dem Gehäuse 22 der Baueinheit 60 heraus und ist in einer Lageraufnahme 65 des Trägers 19 in Eingriff. Mit seinem Schaft durchragt der Bolzen 63 ein Langloch 66 vom Schlitten 20. Das Langloch befindet sich in einem Ansatz 55 des Schlittens 20 und besitzt ein Schlüsselprofil. Am unteren Bolzenende sitzt ein Kopf 67, der aus dem Langloch 66 herausragt und gegenüber dem schmalen Bereich des Schlüssellochprofils von Langloch 66 verbreitert ist. Dadurch lässt sich der Lagerbolzen 63 so lange nicht aus der Baueinheit herausziehen, als das Gehäuse 22 sich in seiner Sicherungslage 20.1 von Fig. 2 befindet. Das ist erst in der Endsicherungslage 62.1 von Fig. 4 möglich. Dann hat sich der Schlitten 20 mit seinem Ansatz 55 soweit nach hinten bewegt, dass der Kopf des Bolzens 63 sich in Ausrichtung mit dem weiten Bereich des Schlüssellochprofils vom Langloch 66 befindet. Nur in dieser Lage sind die Montage und Demontage der Baueinheit 60 möglich.

Wenn, ausgehend von der Sicherungslage 20.1 von Fig. 2, der Exzenter 40 im Sinne des Drehpfeils 42 weiterbewegt wird, kommt es zu einer in Fig. 8 verdeutlichten Grenzdrehstellung des Exzenters 40, wo gerade noch das letzte Stück seines Radialmaximums 46 sich an der vorderen Stützstelle 24 vom Schieber abstützt. Dadurch befindet sich der Schlitten 20 in Fig. 8 immer noch in seiner Sicherungslage 20.1.

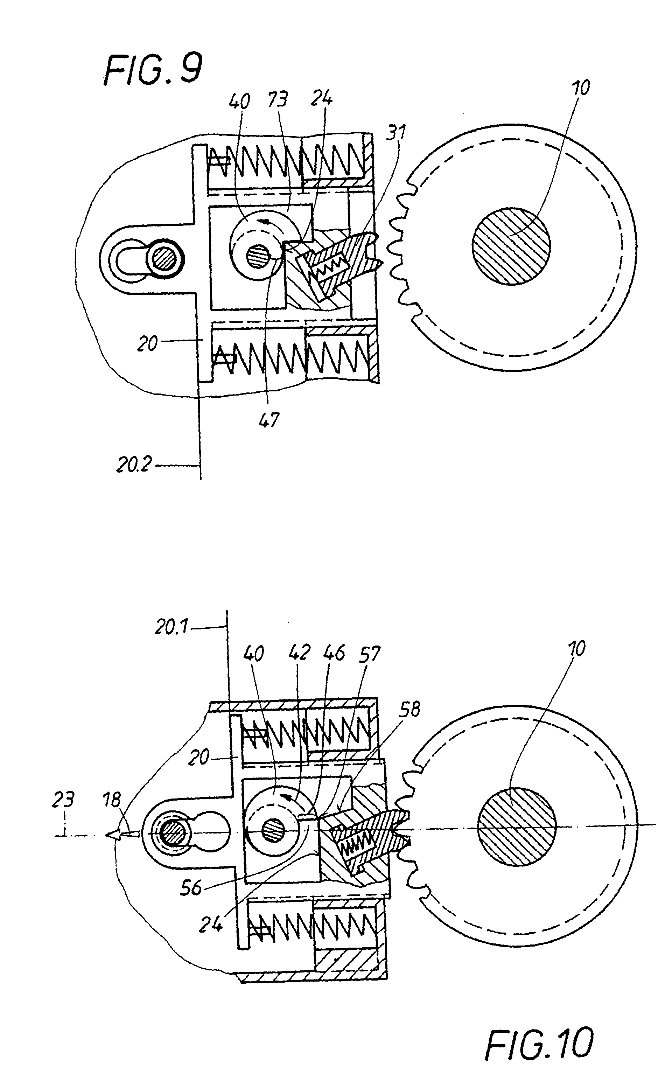

Dies ändert sich bei der minimalen Weiterdrehung 42 des Exzenters in der aus Fig. 9 ersichtlichen Drehstellung. In dieser Drehstellung befindet sich bereits das Radialminimum 47 an der vorerwähnten vorderen Stützstelle 24 und der Schlitten 20 nimmt seine Entsicherungslage 20.2 ein. Die Lenksäule 10 ist vom Zahnsegment 31 freigegeben. In diesem Ausführungsbeispiel erfolgt der Übergang abrupt, weil, wie Fig. 8 zeigt einerseits ein Ausschnitt 56 mit einer steilen Radialstufe im Exzenter 40 und andererseits eine entsprechend steile Gegenstufe 73 an der vorderen Steuerfläche 24 des Schlittens 20 vorliegen. Die Rückstellkraft 18 der Druckfedern 17 sorgt für einen abrupten Übergang zwischen dem radialen Maximum 46 von Fig. 8 und dem radialen Minimum 47 von Fig. 9. Dadurch können störende Geräusche entstehen.

Um dies zu vermeiden, könnte man, wie Fig. 10 zeigt, die Gegenstufe vom Schlitten 20 mit einer der Steuerstelle 24 nachgeschalteten geneigten Steuerflanke 58 versehen. Während die Steuerstelle 24 im Wesentlichen quer zur Schlittenbewegungslinie 23 verläuft, ist die Steuerflanke 58 dazu geneigt. Fig. 10 zeigt ebenfalls die in Fig. 8 erläuterte Grenzlage, wo sich das Radialmaximum 46 des Exzenters an der quer gerichteten Steuerstelle 24 noch abstützt. Auch in diesem Fall ist der Ausschnitt 56 vom Exzenter 40 im Wesentlichen steil, wodurch eine Exzenterspitze 57 steht. Wenn man den Exzenter 40 in Fig. 10 aber im Sinne des Drehfalls 42 weiterbewegt, kommt es zu einer Abstützung der Exzenterspitze 57 an der Steuerflanke 58. Wegen des Schrägverlaufs von 57, 58 wird jetzt der Schlitten 20 durch seine Rückstellkraft 18 gemächlich aus seiner Sicherungslage 20.1 bewegt. Dadurch lassen sich störende Geräusche bei der Umsteuerung der Bewegung des Schlittens 20 vermeiden.

Ähnliche Ergebnisse erhält man, wenn man, wie das Ausführungsbeispiel von Fig. 13 zeigt, den Exzenter 40 mit einem stufenlosen stetigen Exzenterprofil 59 versieht, welches einen allmählichen Übergang zwischen dem Radialmaximum 46 und dem Radialminimum 47 aufweist. Im diesem Ausführungsbeispiel ist das Exzenterprofil 59 so gewählt, dass in jeder Zwischenlage im Wesentlichen eine formschlüssige Führung des Exzenters 40 zwischen den beiden schlittenseitigen Steuerstellen 24, 25 vorliegt. Bei einer solchen formschlüssigen Position könnte man auch auf die Druckfedern 17 verzichten, weil bei einer Drehung 42' vom Exzenter 40 eine Zwangsführung des Schlittens 20 erfolgt. Außerdem ist, wie durch den Doppel-Drehpfeil 42' in Fig. 13 verdeutlicht wird, eine Drehung des Exzenters 40 in beide Richtungen möglich, um den Übergang zwischen der dargestellten Sicherungslage 20.1 und der entsprechenden Entsicherungslage zu bewirken. Der Motor 51 von Fig. 1 bis 3 hat dann einen Hin - und einen gegensinnigen Rücklauf.

Fig. 11 und Fig. 12 zeigen eine weitere Möglichkeit der Geräuschdämpfung bei einer besonders leichtgängigen Umsteuerung des Schlittens 20. Die Fig. 11 verdeutlicht die Sicherungslage 20.1 des Schlittens, wobei die vordere Steuerstelle 24 für den Exzenter 40 von einem Rollglied 70 gebildet ist. Das Rollglied 70 sitzt auf einem Lagerstift 68, der aus Fertigungsgründen das Rollglied 70 in einem in Fig. 11 angedeuteten Kanal 69 positioniert. Bei der Weiterdrehung 42 über den Grenzfall von Fig. 10 hinaus verlässt der Exzenter 40 die mit 24 gekennzeichnete Stützstelle vom Rollglied 70 und es kommt zu Abstützungen des Exzenters 50 mit seitlichen Rollgliedstellen 71 am Stufenstoß 72 des auch hier vorliegenden Exzenterausschnitts 56.

### Bezugszeichenliste:

- 10: Lenksäule
- 11: Zahnrad an 10
- 12: Gegenzahnung
- 13: Gegenzahnspitze bei 12
- 14: Zahnflanken bei 12
- 15: Zahnzwischenräume bei 12
- 16: Lenksäulenachse von 10 (Fig. 1)
- 17: Druckfeder an 20 (Fig. 1, 2)
- 18: Rückstellkraft von 17
- 19: Träger, Verkleidung (Fig.1 bis 3)
- 20: Schlitten
- 20.1: Sicherungslage von 20 (Fig. 1)
- 20.2: Entsicherungslage von 20 (Fig. 4)
- 20.3: erste Zwischenposition von 20 (Fig. 5)
- 20.4: zweite Zwischenposition von 20 (Fig. 6)
- 21: Schlittenführung für 20
- 22: Gehäuse für 21
- 23: Schlittenlängsbewegung, Schlittenbewegungslinie (Ausgangsstellung)
- 23': Schwenkstellung von 23 (Fig. 7)
- 24: vordere Steuerstelle von 20
- 25: hintere Steuerstelle von 20
- 26: innerer Endanschlag an 20 für 36
- 27: äußerer Endanschlag in 20 für 37
- 28: Aussparung in 20 für 38 (Fig. 6)
- 29: Bewegungsweg von 20 zwischen (Fig. 5 und 6)
- 30: Schieber (Ausschubposition) (Fig. 5 und 6)
- 30': Zwischenposition von 30 aus Fig. 5 in Fig. 6
- 31: Zahnsegment an 30
- 32: Zahn an 31, Doppelzahn
- 32': weiterer Zahn an 31 (Fig. 11)
- 33: Längsbewegungslinie von 30 in 20 (Fig. 4, 6)
- 34: Neigungswinkel zwischen 23, 33 (Fig. 4)
- 35: Federkraft für 30 (Fig. 4)
- 36: innere Schulter von 38 (Fig. 6)
- 37: äußere Schulter von 38 (Fig. 6)
- 38: Schieberkopf von 30 (Fig. 6)
- 39: Schieber-Zahnspitze von 32 (Fig. 5, 6)
- 40: Exzenter
- 40': Drehstellung von 40 aus Fig. 5 in Fig. 6
- 41: Exzenterwelle für 40
- 42: Pfeile der Drehbewegung von 40
- 42': Alternierende Drehbewegung von 40 (Fig. 13)
- 43: Schneckenrand auf 41
- 44: vorderer Umfangsbereich bei 46 von 40
- 45: hinterer Umfangsbereich bei 47 von 40
- 46: Radialmaximum von 40
- 47: Radialminimum von 40
- 48: Rückbewegungsstrecke von 30 (Fig. 6)
- 49: Versatzstrecke von 39 zwischen Fig. 5 und 6
- 50: Antrieb für 40
- 51: Elektromotor von 50
- 52: Schnecke von 50
- 53: Leiterplatte in 22 (Fig. 1)
- 54: Teilkreis für 32, 32' (Fig. 7)
- 55: Ansatz an 20
- 56: Ausschnitt in 40 (Fig. 8)
- 57: Exzenterspitze (Fig. 10)
- 58: Steuerflanke an 25 (Fig. 10)
- 59: Exzenterprofil (Fig. 13)
- 60: Baueinheit (Fig. 1, 2)
- 61: Schwenklager (Fig. 1)
- 62: Strecke der Schwenkbewegung von 60 (Fig. 7)
- 63: Lagerbolzen für 60 (Fig. 1)
- 64: oberes Bolzenende (Fig. 1)
- 65: Lageraufnahme in 19 (Fig. 1)
- 66: Langloch in 55 für 63 (Fig. 2)
- 67: Bolzenkopf von 63 (Fig. 1)
- 68: Lagerstift (Fig. 11, 12)
- 69: Kanal (Fig. 11)
- 70: Rollglied in 20 (Fig. 11,12)
- 71: seitliche Rollgliedstelle (Fig. 11)
- 72: Stufenstoß in 56 (Fig. 11)
- 73: Gegenstufe in 20 (Fig. 8, 9)
- 74: Federbelastung von 30 in 20 (Fig. 20)
- 75: Zentriefedern für 60 (Fig. 3)

## Patentansprüche

1. Vorrichtung zur Verriegelung einer Lenksäule (10) mit einem Verriegelungselement, welches mindestens einen unter einer Federbelastung stehenden Zahn (32) besitzt,
und der Zahn (32) im Verriegelungsfall in den Zahnzwischenraum (15) einer drehfest mit der Lenksäule (10) verbundenen Gegenzahnung (12) einfährt,
mit einem das Verriegelungselement tragenden Schlitten (20), der in seiner Schlittenführung (21) von einem drehbaren Exzenter (40) quer zur Lenksäulen-Achse (16) beweglich ist,
nämlich zwischen einer den Verriegelungsfall bestimmenden Sicherungslage (20.1) und einer die Lenksäule (10) freigebenden Entsicherungslage (20.2),
**dadurch gekennzeichnet,**
**dass** das Verriegelungselement aus einem Schieber (30) besteht, der im Schlitten (20) zwischen inneren und äußeren Endanschlägen (26,27) längsbeweglich (33) ist und an dessen aus dem Schlitten (20) herausragenden Vorderende der verriegelungswirksame Zahn (32) sitzt,
**dass** die Schieberlängsbewegung (33) geneigt zur Schlittenbewegung (23) verläuft
und **dass** der Schieber (30) im Ausfahrsinne federbelastet (35) ist und - in der Entsicherungslage (20.2) des Schlittens - am äußeren Endanschlag (27) sich abstützt.

2. Vorrichtung nach Anspruch 1, **dadurch gekennzeichnet, dass** der Schlitten (20) nicht nur in der Entsicherungslage (20.2), sondern auch in der Sicherungslage (20.1) vom Exzenter (40) formschlüssig (25,45;24,44) gehalten wird.

3. Vorrichtung nach Anspruch 1 oder 2, **dadurch gekennzeichnet, dass** - in Sicherungslage (20.1) des Schlittens (20) - der Schieber (30) gegen seine Federbelastung (35) in Richtung seines inneren Endanschlags (26) im Schlitten (20) zurückgeschoben ist.

4. Vorrichtung nach einem der Ansprüche 1 bis 3, **dadurch gekennzeichnet, dass** der Zahn (32) des Schiebers (23) zwar geneigt zur Schieberlängsbewegung (33) aber im Wesentlichen parallel zur Schlittenbewegung (23) verläuft.

5. Vorrichtung nach einem der Ansprüche 1 bis 4, **dadurch gekennzeichnet, dass** der Schlitten (20) zwei gegeneinander aufweisende Steuerstellen (24,25) besitzt, zwischen denen der Exzenter (40) angeordnet ist,
wobei die Steuerstellen (24,25) mit zwei Umfangsbereichen (44,45) des Exzenters (40) zusammenwirken, die im Wesentlichen auf zueinander diagonal gegenüberliegenden Seiten des Exzenters (40) angeordnet sind.

6. Vorrichtung nach Anspruch 1 bis 5, **dadurch gekennzeichnet, dass** der Schlitten (20) unter der Wirkung einer ihm im Einfahrsinne (18) belastenden Feder (17) steht,
und dass die dem Schieber (30) zugekehrte vordere Steuerstelle (24) des Schlittens (20) in der Sicherungslage (20.1) vom das radiale Maximum (46) aufweisenden vorderen Umfangsbereich (44) des Exzenters (40) hintergriffen wird, während die gegenüberliegende hintere Steuerstelle (25) des Schlittens (20) in der Entsicherungslage (20.2) am das radiale Maximum (47) aufweisenden hinteren Umfangsbereich des Exzenters anliegt.

7. Vorrichtung nach Anspruch 5 oder 6, **dadurch gekennzeichnet, dass** mindestens in der Sicherungs- und Entsicherungslage (20.1,20.2) des Schlittens sowohl die vordere als auch die hintere Steuerstelle (24,25) gleichzeitig an den jeweils zugehörigen Umfangsbereichen (44,45) des Exzenters (40) anliegen.

8. Vorrichtung nach einem der Ansprüche 1 bis 7, **dadurch gekennzeichnet, dass** der Exzenter (40) im Anschluss an sein Radialmaximum (46), welches bei Abstützung an der vorderen Steuerstelle (24) vom Schlitten (20) die Sicherungslage (20.1) bestimmt, ausgeschnitten (56) ist und dort eine Radialstufe bildet,
dass der Schlitten (20) in Richtung seiner Entsicherungslage (20.2) federbelastet (18) ist und die vordere Steuerstelle (24) des Schlittens (20) in jeder Drehposition mindestens kraftschlüssig am jeweils vorderen Umfangsbereich (44) des Exzenters (40) anliegt
und dass - beim Weiterdrehen (42) des Exzenters (40) aus der Sicherungslage (20.1) des Schlittens (20) - die vordere Steuerstelle (24) vom Schlitten (20) sich kraftschlüssig vom Radialmaximum (46), auf das Radialminimum (47) zu bewegt, welches sich zurückgesetzt im Stufengrund der Radialstufe befindet.

9. Vorrichtung nach Anspruch 8, **dadurch gekennzeichnet, dass** der Schlitten im Bereich seiner vorderen Steuerstelle (24) eine Gegenstufe (73) besitzt, in welche der Exzenter (40) mit seiner Exzenterspitze (57) bei der Drehung (42) zeitweise einfährt.

10. Vorrichtung nach Anspruch 8 oder 9, **dadurch gekennzeichnet, dass** die Ausschnittstufe (73) eine zur Schlittenbewegungsrichtung (23) geneigte Steuerflanke (58) aufweist, an welcher der Exzenter zeitweise entlang fährt.

11. Vorrichtung nach einem der Ansprüche 1 bis 10, **dadurch gekennzeichnet, dass** die vordere und/oder hintere Steuerstelle (24,25) vom Schlitten (20) aus einem Rollglied (70) bestehen.

12. Vorrichtung nach einem der Ansprüche 1 bis 11, **dadurch gekennzeichnet, dass** der Schlitten (20) mit seiner Schlittenführung (21), ferner der im Schlitten (20) aufgenommene Schieber (30), der Exzenter (40) und schließlich ein Antrieb (50) für den Exzenter (40) in einem Gehäuse (22) vormontiert sind und eine Baueinheit (60) bilden, die im Bereich der Lenksäule (10) montierbar ist.

13. Vorrichtung nach Anspruch 12, **dadurch gekennzeichnet, dass** die Baueinheit (60) über ein am Gehäuse (22) vorgesehenes Schwenklager (61) an einem ortsfesten Träger (19) montiert ist,
dass im Montagefall der am Schieber (30) befindliche Zahn für die an der Lenksäule (10) sitzende Gegenzahnung (12) zugänglich ist
und dass die Schwenklagerung (61) der Baueinheit (60) die Zahnspitze (39) vom Schieber-Zahn (32) tangential gegenüber der Gegenzahnung (12) verschwenkbar (62) macht.

14. Vorrichtung nach Anspruch 13, **dadurch gekennzeichnet, dass** das Schwenklager (61) im Bereich des vom Schieber-Zahn (32), abgekehrten hinteren Endes der Baueinheit (60) angeordnet ist.

15. Vorrichtung nach Anspruch 13 oder 14, **dadurch gekennzeichnet, dass** eine Zentrierfeder (75) die Baueinheit (60) in einer Ausgangsstellung (23) positioniert,
aus welcher die Baueinheit (60) aufgrund der Wechselwirkungen zwischen dem Schieber-Zahn (32) und der Gegenzahnung (12) in Winkelstellungen (23') elastisch verschwenkbar (62) ist.

16. Vorrichtung nach einem der Ansprüche 13 bis 15, **dadurch gekennzeichnet, dass** ein Lagerbolzen (63) die Verschwenkbarkeit (62) der Baueinheit (60) bestimmt und dass dieser Lagerbolzen (63) zugleich als Befestigungsmittel für die Baueinheit (60) am Träger (19) dient.

17. Vorrichtung nach Anspruch 16, **dadurch gekennzeichnet, dass** der Lagerbolzen (63) in die Baueinheit (60) integriert ist und mit mindestens einem Bolzenende (64) aus dem Gehäuse (22) der Baueinheit (60) herausragt
und dass dieses Bolzenende (64) im Befestigungsfall in eine Lageraufnahme (65) des ortsfesten Trägers (19) eingreift.

18. Vorrichtung nach Anspruch 16 oder 17, **dadurch gekennzeichnet, dass** der Lagerbolzen (64) zwar vom Träger (19) und/oder vom Gehäuse (22) lösbar ist,
dass aber seine Demontage nur in der Entsicherungsstellung (20.2) des Schlittens (20) möglich ist.

19. Vorrichtung nach einem der Ansprüche 1 bis 18, **dadurch gekennzeichnet, dass** die Drehung (42) des Exzenters (40) durch Zugangsberechtigungsmittel auslösbar ist,
dass der Stopp des Exzenters (40) in definierten Drehstellungen über eine Steuerung erfolgt, die von den Zugangsberechtigungsmitteln wirksam gesetzt wird,
und dass normalerweise die Sicherungslage (20.1) des Schlittens (20) vorliegt, aber seine Entsicherungslage (20.2) nur durch Wirksamsetzen der Zugangsberechtigungsmittel möglich ist.

20. Vorrichtung nach einem der Ansprüche 13 bis 19, **dadurch gekennzeichnet, dass** der Schieber (20) mehrere verriegelungswirksame Zähne (32, 32') trägt
und dass diese Zähne (32,32') ein Zahnsegment (31) bilden, welches auf einem Teilkreis (54) liegt, dessen Kreismittelpunkt durch die Schwenkachse (61) der Baueinheit (60) geht.

## Claims

1. Device for locking a steering column (10) having a locking element which comprises at least one tooth (32) subjected to spring-loading,
and in the locking position the tooth (32) moves into the tooth space (15) of mating teeth (12) connected for rotation with the steering column (10),
having a carriage (20) that carries the locking element and is movable in its carriage guide (21) by a rotatable eccentric (40) perpendicularly to the axis of the steering column (16),
namely between a securing position (20.1) which determines the locking position and a release position (20.2) which releases the steering column (10),
**characterised in that**
the locking element consists of a slide (30) which is longitudinally movable (33) in the carriage (20) between inner and outer end stops (26, 27) and is seated by the front end of the locking tooth (32) protruding from the carriage (20),
**in that** the longitudinal movement of the slide (33) runs at an inclined angle to the movement of the carriage (23)
and **in that** the slide (30) is spring-loaded (35) in the direction of emergence and - in the release position (20.2) of the carriage - bears on the outer end stop (27).

2. Device according to claim 1, **characterised in that** the carriage (20) is held by the eccentric (40) by interlocking engagement (25, 45; 24, 44), not only in the release position (20.2) but also in the securing position (20.1).

3. Device according to claim 1 or 2, **characterised in that** - in the securing position (20.1) of the carriage (20) - the slide (30) is pushed back against its spring loading (35) towards its inner end stop (26) in the carriage (20).

4. Device according to one of claims 1 to 3, **characterised in that** the tooth (32) of the slide (23) extends at an angle to the longitudinal movement (33) of the slide but extends substantially parallel to the movement of the carriage (23).

5. Device according to one of claims 1 to 4, **characterised in that** the carriage (20) has two control locations (24, 25) facing towards one another, between which the eccentric (40) is arranged,
the control locations (24, 25) cooperating with two circumferential regions (44, 45) of the eccentric (40) which are essentially disposed on diagonally opposite sides of the eccentric (40).

6. Device according to claim 1 to 5, **characterised in that** the carriage (20) is acted upon by a spring (17) which biases it in the direction of engagement (18),
and **in that** the front control location (24) of the carriage (20) facing the slide (30) is engaged, in the securing position (20.1), by the front circumferential region (44) of the eccentric (40) having the radial maximum (46), while the opposite rear control location (25) of the carriage (20) in the release position (20.2) abuts on the rear circumferential region of the eccentric having the radial maximum (47).

7. Device according to claim 5 or 6, **characterised in that** at least in the securing and release positions (20.1, 20.2) of the carriage, both the front and the rear control location (24, 25) simultaneously abut on the associated circumferential regions (44, 45) of the eccentric (40).

8. Device according to one of claims 1 to 7, **characterised in that** the eccentric (40) is cut away (56) adjacent to its radial maximum (46), which determines the securing position (20.1) when supported on the front control location (24) of the carriage (20), and forms a radial step there,
**in that** the carriage (20) is spring-loaded (18) towards its release position (20.2) and the front control location (24) of the carriage (20) abuts at least in frictionally connected manner on the front circumferential region (44) of the eccentric (40) in every position of rotation
and **in that** - as the eccentric (40) is rotated further (42) out of the securing position (20.1) of the carriage (20) - the front control location (24) of the carriage (20) moves in frictionally connected manner from the radial maximum (46) to the radial minimum (47) which is set back in the base of the radial step.

9. Device according to claim 8, **characterised in that**, in the region of its front control location (24), the carriage has a mating step (73) into which the eccentric (40) moves intermittently with its tip (57) during the rotation (42).

10. Device according to claim 8 or 9, **characterised in that** the cut-out step (73) has a control flank (58) which is inclined relative to the direction of movement (23) of the carriage, along which the eccentric travels intermittently.

11. Device according to one of claims 1 to 10, **characterised in that** the front and/or rear control location (24, 25) of the carriage (20) consists of a roller member (70).

12. Device according to one of claims 1 to 11, **characterised in that** the carriage (20) with its carriage guide (21), and also the slide (30) accommodated in the carriage (20), the eccentric (40) and finally a drive (50) for the eccentric (40) are pre-mounted in a housing (22) and form an assembly (60) which can be mounted in the region of the steering column (10).

13. Device according to claim 12, **characterised in that** the assembly (60) is mounted on a stationary support (19) via a pivot mounting (61) provided on the housing (22),
in the assembled state the tooth disposed on the slide (30) is accessible for the mating teeth (12) located on the steering column (10)
and **in that** the pivot mounting (61) of the assembly (60) makes the tip (39) of the slide tooth (32) pivotable (62) tangentially to the mating teeth (12).

14. Device according to claim 13, **characterised in that** the pivot mounting (61) is arranged in the region of the rear end of the assembly (60) remote from the slide tooth (32).

15. Device according to claim 13 or 14, **characterised in that** a centring spring (75) positions the assembly (60) in a starting position (23),
out of which the assembly (60) is elastically pivotable (62) in angular positions (23') as a result of the interactions between the slide tooth (32) and the mating teeth (12).

16. Device according to one of claims 13 to 15, **characterised in that** a bearing bolt (63) determines the pivotability (62) of the assembly (60)
and **in that** this bearing bolt (63) simultaneously acts as a fixing means for fixing the assembly (60) to the support (19).

17. Device according to claim 16, **characterised in that** the bearing bolt (63) is integrated in the assembly (60) and projects with at least one end (64) of the bolt out of the housing (22) of the assembly (60)
and **in that** in the fixed state this bolt end (64) engages in a mounting recess (65) in the stationary support (19).

18. Device according to claim 16 or 17, **characterised in that** the bearing bolt (64) can indeed be released from the support (19) and/or from the housing (22)
but that it can only be demounted in the release position (20.2) of the carriage (20).

19. Device according to one of claims 1 to 18, **characterised in that** the rotation (42) of the eccentric (40) can be initiated by access authorising means,
**in that** the stopping of the eccentric (40) in defined rotational positions is effected by means of a control which is activated by the access authorising means,
and **in that** normally the carriage (20) is in its securing position (20.1) but its release position (20.2) can only be achieved by activating the access authorising means.

20. Device according to one of claims 13 to 19, **characterised in that** the slide (20) carries a plurality of locking teeth (32, 32')
and **in that** these teeth (32, 32') form a toothed segment (31) which is located on a divided circle (54), the centre of which passes through the pivot axis (61) of the assembly (60).

## Revendications

1. Dispositif de verrouillage d'une colonne de direction (10), avec un élément de verrouillage comprenant au moins une dent (32) placée sous une sollicitation élastique,
et la dent (32), à l'état de verrouillage, pénètre dans l'espace d'entre-dent (15) d'une denture conjuguée (12) reliée, de façon assujettie en rotation, à la colonne de direction (10),
avec un chariot (20) portant l'élément de verrouillage, qui, dans son guidage de chariot (21), est mobile transversalement par rapport à l'axe de colonne de direction (16), grâce à un excentrique (40) susceptible de tourner,
précisément est mobile, entre une position d'armement (20.1), déterminant le cas de verrouillage, et une position de désarmement (20.2), libérant la colonne de direction (10),
**caractérisé**
**en ce que** l'élément de verrouillage est formé d'un coulisseau (30), déplaçable longitudinalement (33) dans le chariot (20), entre les butées d'extrémité intérieures et extérieures (26, 27) et, sur son extrémité avant, sortant du chariot (20), est placée la dent (32) agissant pour produire le verrouillage,
**en ce que** la direction de déplacement longitudinal (33) du coulisseau est inclinée par rapport à la direction de déplacement (23) du chariot,
et **en ce que** le coulisseau (30) est sollicité élastiquement (35) dans le sens de la sortie et - lorsque le chariot est en position désarmée (20.2) - prend appui sur la butée d'extrémité extérieure (27).

2. Dispositif selon la revendication 1, **caractérisé en ce que** le chariot (20) est maintenu, non seulement à la position de désarmement (20.2) mais également à la position d'armement (20.1), par l'excentrique (40), avec une liaison par ajustement de forme (25, 45 ; 24, 44).

3. Dispositif selon la revendication 1 ou 2, **caractérisé en ce que** - lorsque le chariot (20) est en position d'armement (20.1) - le coulisseau (30) est ramené, à l'encontre de sa sollicitation élastique (35), en direction de sa butée de fin de course intérieure (26) dans le chariot (20).

4. Dispositif selon l'une des revendications 1 à 3, **caractérisé en ce que** la dent (32) du coulisseau (23), certes est inclinée par rapport à la direction de déplacement longitudinal (33) du coulisseau, mais s'étend sensiblement parallèlement à la direction de déplacement (23) du chariot.

5. Dispositif selon l'une des revendications 1 à 4, **caractérisé en ce que** le chariot (20) comprend deux points de commande (24, 25) opposé l'un à l'autre, entre lesquels est disposée l'excentrique (40),
les points de commande (24, 25) coopérant avec deux zones périphériques (44, 45) de l'excentrique (40), disposées sensiblement sur des faces mutuellement opposées en diagonale de l'excentrique (40).

6. Dispositif selon les revendications 1 à 5, **caractérisé en ce que** le chariot (20) est placé sous l'effet d'un ressort (17) le chargeant dans le sens (18) de la rétraction,
et **en ce que** le point de commande (24) avant, tourné vers le coulisseau (30), du chariot (20), lorsqu'on est en position d'armement (20.1), est saisi par l'arrière par la zone périphérique avant (44), présentant le maximum radial (46), de l'excentrique (40), tandis que le point de commande arrière (25) opposé du chariot (20), à la position de désarmement (20.2), appuie sur la zone périphérique arrière, présentant un maximum radial (47), de l'excentrique.

7. Dispositif selon la revendication 5 ou 6, **caractérisé en ce qu'**au moins à la position d'armement et de désarmement (20.1, 20.2) du chariot, tant le point de commande avant, qu'également arrière (24, 25), appuient simultanément sur les zones périphériques (44, 45) afférentes, respectivement, de l'excentrique (40).

8. Dispositif selon l'une des revendications 1 à 7, **caractérisé en ce que** l'excentrique (40), en raccordement à son maximum radial (46) qui détermine la position d'armement (20.1) en cas d'appui sur le point de commande avant (24) par le chariot (20), est muni d'une découpure (56) et forme à cet endroit un étagement radial,
**en ce que** le chariot (20) est sollicité élastiquement (18) dans le sens de sa position de désarmement (20.2) et le point de commande avant (24) du chariot (20), à toute position de rotation, appuie ,au moins avec une liaison par interaction de force, chaque fois sur la zone périphérique avant (44) de l'excentrique (40)
et **en ce que** - lors de la continuation de la rotation (42) de l'excentrique (40) quittant la position d'armement (20.1) du chariot (20) - le point de commande avant (24) du chariot (20) se déplace, avec une liaison à interaction de forces, du maximum radial (46) au minimum radial (47) se trouvant en retrait dans le fond de l'échelonnement radial.

9. Dispositif selon la revendication 8, **caractérisé en ce que** le chariot, dans la zone de son point de commande avant (24), comprend un étagement conjugué (73), dans lequel l'excentrique (40) pénètre, par moments, par sa pointe d'excentrique (57), lors de la rotation (42).

10. Dispositif selon la revendication 8 ou 9, **caractérisé en ce que** l'étagement de découpure (73) présente un flanc de commande (58), incliné par rapport à la direction de déplacement de chariot (23), sur lequel passe, par moments, l'excentrique.

11. Dispositif selon l'une des revendications 1 à 10, **caractérisé en ce que** les point de commande avant et/ou arrière (24, 25) du chariot (20) sont formés d'un organe roulant (70).

12. Dispositif selon l'une des revendications 1 à 11, **caractérisé en ce que** le chariot (20) avec son guidage de chariot (21), en outre le coulisseau (30) logé dans le chariot (20), l'excentrique (40) et, enfin, un entraînement (50) pour l'excentrique (40), sont prémontés dans un boîtier (22) et forment un ensemble (60), pouvant être monté dans la zone de la colonne de direction (10).

13. Dispositif selon la revendication 12, **caractérisé en ce que** l'ensemble (60) est monté sur un support (19) localement fixe, par l'intermédiaire d'un palier de pivotement (61) prévu sur le boîtier (22),
**en ce que**, en cas de montage, la dent se trouvant sur le coulisseau (30) est accessible à la denture conjuguée (12) se plaçant sur la colonne de direction (10)
et **en ce que** le montage en palier pivotant (61) de l'ensemble (60) rend la pointe de dent (39) de la dent de coulisseau (32)susceptible de pivoter tangentiellement par rapport à la denture conjuguée (12).

14. Dispositif selon la revendication 13, **caractérisé en ce que** le palier de pivotement (61) est disposé dans la zone de l'extrémité arrière, opposée à la dent de coulisseau (32), de l'ensemble (60).

15. Dispositif selon la revendication 13 ou 14, **caractérisé en ce qu'**un ressort de centrage (75) positionne l'ensemble (60) à une position initiale (23),
d'où l'ensemble (60), du fait des effets mutuels, est susceptible de pivoter élastiquement (62), entre la dent de coulisseau (32) et la denture conjuguée (12), en passant par des positions angulaires (23').

16. Dispositif selon l'une des revendications 13 à 15, **caractérisé en ce qu'**un boulon de palier (63) détermine la mobilité en pivotement (62) de l'ensemble (60), et **en ce que** ce boulon de palier (63) sert en même temps de moyen de fixation à l'ensemble (60) sur le support (19).

17. Dispositif selon la revendication 16, **caractérisé en ce que** le boulon de palier (63) est intégré dans l'ensemble (60) et ressort du boîtier (22) de l'ensemble (60), par au moins une extrémité de boulon (64),
et **en ce que** cette extrémité de boulon (64), en cas de fixation, s'engage dans un logement de palier (65) du support (19) localement fixe.

18. Dispositif selon la revendication 16 ou 17, **caractérisé en ce que** le boulon de palier (63) est, certes, susceptible d'être désolidarisé du support (19) et/ou du boîtier (22),
mais son démontage n'est possible que lorsque le chariot (20) est en position désarmée (20.2).

19. Dispositif selon l'une des revendications 1 à 18, **caractérisé en ce que** la rotation (42) de l'excentrique (40) peut être déclenchée par des moyens d'autorisation d'accès,
**en ce que** l'arrêt de l'excentrique (40) à des positions en rotation définies se fait par une commande mise en action par les moyens d'autorisation d'accès,
et **en ce que**, normalement, la position d'armement (20.1) du chariot (20) est prise, mais que sa position de désarment (20.2) ne peut être prise que par mise en action des moyens d'autorisation d'accès.

20. Dispositif selon l'une des revendications 13 à 19, **caractérisé en ce que** le coulisseau (20) porte une pluralité de dents (32, 32') agissant pour le verrouillage
et **en ce que** ces dents (32, 32') forment un segment denté (31) situé sur un cercle partiel (54), dont le centre passe par l'axe de pivotement (61) de l'ensemble (60).
